# EUROPEAN PATENT APPLICATION

(11) **EP 4 818 139 A1**
(43) Date of publication of application: **07.10.2026**
(21) Application number: 26164129.4
(22) Date of filing: 11.03.2026
(51) Int. Cl.: C04B 28/04, C04B 18/14, C04B 20/00, C04B 20/02, C04B 111/20

(54) **SUSTAINABLE AND ANTI-AGING CONCRETE, METHODS AND USES THEREOF**

(30) Priority: 11.03.2025 PT 2025120106
(71) Applicant: Domingos Silva Teixeira SA, 4700-727 Braga (PT)
(72) Inventor: MESQUITA RODRIGUES, MAFALDA MARGARIDA, 4700-553 Braga (PT); BORGES PEREIRA, EDUARDO NUNO, 4800-058 Guimarães (PT); CUNHA, VÍTOR M.C.F., 4800-058 Guimarães (PT); MIRANDA, TIAGO, 4800-058 Guimarães (PT); GAIBOR VACA, NORMA YOLANDA, 4800-058 Guimarães (PT); NEVES, ANA RITA, 4800-058 Guimarães (PT); ALMEIDA, JOÃO, 4800-058 Guimarães (PT)
(74) Representative: Patentree

(57) **Abstract**

The present disclosure relates to a concrete mixture comprising: 7.5% (w/w) or more of cementious material; at least 60% (w/w) of inert steel slag aggregates, ISAC; at least 9% (w/w) of a filler selected from fly ashes or inert steel slag powder; 0.01 to 0.2% (w/w) of additives; 2% to 10% (w/w) of water.

## Description

### TECHNICAL FIELD

The present disclosure relates to a sustainable and anti-aging concrete composition comprising steel slag or powder. Particularly, it relates to an inert steel slag aggregate for construction (ISAC), which serves as part of the binder and/or aggregate for construction applications.

### BACKGROUND

Inert steel aggregate for construction (ISAC) slag is a byproduct of the steelmaking process. The ISAC is used as aggregate material in various construction applications, including concrete, asphalt, road base, and embankment.

Document WO2018124485 discloses a self-healing concrete fine aggregates using stainless steel slag, electric arc furnace reducing slag (EAFS), a manufacturing method therefor, and self-healing concrete using the same.

Document US10882791 discloses a concrete composition containing cement, a fine aggregate such as sand, a coarse aggregate such as crushed limestone, and an industrial waste material such as electric arc furnace dust cement kiln dust, oil ash, or limestone powder.

However, existing solutions in concrete production fall short in three key areas: limited utilization of industrial by-products, inadequate carbonation resistance, and suboptimal durability. Conventional mixtures rely heavily on resource-intensive natural aggregates and cement, overlooking the potential of materials like EAFS and fly ash (FA) to reduce environmental impact. Traditional concrete is susceptible to carbonation, leading to reinforcement corrosion and reduced lifespan, while its porous nature can result in higher water absorption and permeability. These factors collectively contribute to premature aging and deterioration of concrete structures, highlighting the need for innovative approaches that address these challenges simultaneously.

These facts are disclosed in order to illustrate the technical problem addressed by the present disclosure.

### GENERAL DESCRIPTION

The present disclosure relates to a concrete composition comprising inert steel aggregate for construction. Namely it relates to a concrete composition comprising inert steel aggregate for construction ISAC, or its powdered form. This composition enhances compressive strength and extends the concrete's life cycle through chemical interactions between the steel slag and concrete components or aggressive agents, particularly due to carbonation.

The present disclosure relates to a concrete composition comprising comprising inert steel aggregate for construction, ISAC, to enhance compressive strength and extend the lifespan of concrete structures by reducing carbonation. The ISAC, in aggregate or powdered form, is an industrial by-product that undergoes minimal chemical reactions with concrete components and aggressive agents, resulting in improved structural performance. This innovative formulation provides significant advantages for construction and infrastructure development.

For the purposes of this disclosure, ISAC refers to the well-known Electric Arc Furnace Slag (EAFS) but will be identified as ISAC throughout this document.

Furthermore, sustainability is emphasized through the incorporation of eco-friendly components and processes.

The use of ISAC, in either aggregate or powdered form, enhances strength, durability, and sustainability compared to conventional concrete mixtures. It also reduces environmental impact by partially replacing cement with supplementary cementitious materials such as fly ashes or ISAC in powder, lowers the production costs of the concrete, and promotes construction efficiency.

The term "aggregates" refers to particulate materials having a particle size typically greater than that of filler materials and used as the main structural component of the concrete mixture. Aggregates generally comprise particles having a size up to 20 mm, and may include both coarse and fine fractions depending on the particle size distribution. In the present disclosure, the aggregates are steel slag aggregates, preferably ISAC, which provide the mechanical feature of the concrete mixture and contribute to the mechanical strength, stability, and durability of the hardened concrete.

The term "powder" refers to finely divided particulate material having a substantially smaller particle size than aggregates and acting primarily as a filler or supplementary material within the concrete mixture. In the present disclosure, powders have a particle size below 150 µm and may be used to improve particle packing, reduce voids in the mixture, and enhance the rheological and mechanical properties of the resulting concrete. In the present disclosure, the powder is steel slag powder, such as powder obtained from inert steel slag aggregates (ISAC), and may function as a filler material within the concrete mixture.

The term "filler" refers to a finely divided particulate material incorporated into the concrete mixture primarily to fill voids between larger particles and to improve the packing density of the mixture. Fillers generally have a particle size smaller than that of aggregates, typically below 150 µm, and may contribute to improved workability, reduced porosity, and enhanced mechanical performance of the hardened concrete. In the present disclosure, the filler is preferably fly ash (FA) or powder derived from inert steel slag aggregates,ISAC, which assists in optimizing particle packing and improving the overall structure of the concrete mixture.

The present disclosure relates to a concrete comprising anti-aging properties, designed for enhanced durability and longevity through improved carbonation resistance and reduced permeability. Incorporating steel slags, preferably ISAC aggregates or ISAC powder, reduces the need for or reliance on natural resources while maintaining superior carbonation resistance compared to conventional concrete.

In an embodiment, the ISAC, in aggregate or powdered form, partially or totally replaces the inert components of the concrete mixture. Preferably, replaces 70% to 100% (wt/wt) of natural aggregates, sand, and gravel. Additionally, FA or powdered ISAC replace 5% to 50% (wt/wt) of cement in the mixture.

Preferably, the steel slag is an inert steel aggregate. The steel slag can be in either aggregate or powder form.

The concrete composition comprising the ISAC, aggregate or powder, offers several advantages over conventional formulations:

The presence of inert steel slag aggregate or powder promotes the formation of durable hydration products, leading to increased compressive strength and structural integrity.

By delaying carbonation, the composition extends the service life of concrete structures, minimizing the need for maintenance and repair.

The use of ISAC aggregate or powder enhances concrete performance and longevity, leading to significant lifecycle cost savings.

The present disclosure relates to a concrete mixture comprising:
7.5% (w/w) or more of cementious material;
at least 60% (w/w) of steel slag aggregates or steel slag powder;
at least 9% (w/w) of a filler selected from fly ashes or powder;
0.01 to 0.2% (w/w) of additives;
2% to 10% (w/w) of water.

The filler may be considered a supplementary cementitious material, particularly when comprising FA or ISAC powder, which exhibits pozzolanic activity in the presence of cement.

The term "additive" refers to any substance incorporated into a composition to modify, enhance, or impart one or more properties of the composition. Additives may be introduced before, during, or after the preparation of the composition and may include, without limitation, fillers, pigments, stabilizers, dispersants, preservatives, or other functional agents intended to influence physical, chemical, or functional characteristics of the composition.

In the context of the present disclosure, the term "admixture" refers to a particular type of additive introduced during the mixing stage of the composition. Accordingly, the term "additive", when used broadly, may encompass admixtures unless the context clearly indicates otherwise.

In an embodiment, the additive is an admixture.

In an embodiment for better results, the inert steel slag aggregate is preferably an inert steel slag aggregate for construction (ISAC).

The powder of the filler is preferably ISAC powder.

Preferably, the concrete mixture comprises:
18 to 20% (w/w) of cementious material comprising 8% (w/w) is cement, and at least 9% (w/w) is fly ash (FA) or ISAC in powdered form;
at least 66% (w/w) of ISAC aggregates;
at least 10% of fine aggregates;
0.01% to 0.2% (w/w) of additives;
2% to 10% (w/w) of water.

In an embodiment, the concrete mixture comprises:
8% (w/w) of cementitious material, namely cement,
70% of steel slag aggregates or steel slag powder;
9% (w/w) of filler;
up to 11% (w/w) of fine aggregates;
up to 0.12 (w/w) of additives;
6% (w/w) of water.

Preferably, the concrete mixture comprises up to 20% (w/w) of cementious material comprising up to 8% (w/w) is cement and at least 9% (w/w) is fly ash (FA) or ISAC in its powdered form; up to 11% (w/w) of fine aggregates that may be replaced with ground material from ISAC; 75% (w/w) of ISAC aggregates, up to 0.12 (w/w) of additives and up to 6% (w/w) of water.

In an embodiment, the fine aggregates are selected from a list of: sand or material obtained by grinding ISAC or combinations thereof.

In an embodiment, the filler has a particle size below 150 µm.

In an embodiment, the steel slag aggregates or steel slag powder comprise inert steel aggregate for construction. Preferably, the inert steel aggregate for construction comprises ISAC in aggregate form, powder form, or a mixture thereof.

In an embodiment, the ISAC has a particle size of up to 20 mm, preferably from 1 to 15 mm, more preferably from 4 to 10 mm. Preferably, the ISAC has a well-graded particle size distribution within the 0-20 mm range, as determined by sieving, particularly 0.01-20 mm range. In particular, the ISAC aggregate may be provided in two grain-size fractions, namely 0.01-4 mm and 0-20 mm.

In an embodiment, the ISAC aggregates have a porosity from 0.20 to 0.80, preferably 0.40 to 0.65, as determined by water absorption tests (e.g., 1.6% water absorption for ISAC aggregates).

In an embodiment, at least 37.0% (w/w) of the ISAC aggregate has an aggregate size up to 4 mm, measured by sieving according to EN 933-1:2014; particles are categorized into 0-4 mm fractions.

In an embodiment, the pore size of ISAC aggregates is inferior to 100 µm; preferably, 50% of the pore sizes range between 10 and 50 µm.

The pore size of the material may be determined using techniques known in the art for measuring pore diameter and pore size distribution. Suitable methods may be mercury intrusion porosimetry, gas adsorption analysis, and microscopy techniques including scanning electron microscopy (SEM) combined with image analysis.

In an embodiment, at least 29.0% (w/w) of the inert steel aggregate slag has an aggregate size ranging up to 20 mm, wherein each aggregate is measured by sieving according to EN 933-1:2014; particles are categorized into 0-20 mm fractions.

In an embodiment, at least 40% (w/w) of the inert steel aggregate (ISAC), for construction has an aggregate size ranging up to 20 mm.

In an embodiment, the filler is selected from fly ash (FA), limestone filler, ISAC powder or other fine mineral powders.

In an embodiment, the additive is selected from the group consisting of superplasticizers (SP), plasticizers (PL), fibers (e.g., recycled tire steel fibers, RTSF), or mixtures thereof. Particularly additive is selected from the group consisting of a last generation superplasticizer (SP) based on poly aryl ether (PAE) polymers and plasticizers (PL) based on modified lignosulphonates, or mixtures thereof.

In an embodiment, the amount of superplasticizer is from 0.01% to 0.1% (w/w), and the amount of plasticizer is 0.01% to 0.1% (w/w).

In an embodiment, the concrete mixture comprises up to 20% (wt/wt) of a binder, preferably 5 to 18% (w/w) of a binder, more preferably 5 to 15% (w/w) of a binder.

In an embodiment, the concrete mixture comprises 8 to 10%(w/w) of a binder.

In an embodiment, the binder is selected from Portland cement, fly ash (FA_2), powder, particularly ISAC powder or other supplementary cementitious materials.

It also relates to a method of obtaining the concrete mixture according to any of the previous claims, comprising the following steps:
- obtaining inert steel slag aggregate from a steel production process;
- grinding and refining the steel slag aggregate to obtain powder, or aggregates with particle sizes ranging from 0.01 to 20 mm; preferably 4 to 15 mm;
- mixing the steel slag aggregate with cementious material, filler, and additives, to form a concrete mixture;
- curing the concrete mixture.

Particularly, cementious material is Portland cement, the filler is fly ashes (FA) or ISAC powder, and the additives are SP and PL.

In an embodiment, the steel slag aggregate is an inert steel aggregate for construction.

The measurement of the granulometry/particle size of the particles/ aggregates may be carried out in various ways; in this disclosure, the measurement granulometry/particle size was carried out on the basis of the standard the granulometry analysis by mechanical sieving.

### BRIEF DESCRIPTION OF THE DRAWINGS

The following figures provide preferred embodiments for illustrating the disclosure and should not be seen as limiting the scope of the invention.
**Figure 1****:** Graphic representation of the particle size distribution of the inert steel slag aggregate for construction (ISAC), represented in the figure as EAFS.
**Figure 2****:** Graphic representation of the mechanical testing results of REF2 and EAFS8D1 mixtures at 7, 28, and 90 days after casting, with lower cement amount: (a) average compressive strength, *f_{cm}*; (b) average elasticity modulus, *E_{cm}*.
**Figure 3****:** Graphic representation of the results of water absorption by immersion: (a) for REF2, EAFS8D1, and FRC_EAFS mixtures at atmospheric pressure; (b) for EAFS8D1 under vacuum.
**Figure 4****:** Graphic representation of the results of water absorption by capillarity for REF2, EAFS8D1, and FRC_EAFS mixtures.
**Figure 5****:** Graphic representation of the results of carbonation depth along exposed time for REF2, EAFS8D1, and FRC_EAFS mixtures.
**Figure 6****:** Representation of the evolution of carbonation depth at increasing exposure times for the REF2 mixture and for the mixtures designed with EAFS and RTSF.

### DETAILED DESCRIPTION

The present disclosure provides a concrete composition comprising inert steel slag aggregates or powder, designed to enhance compressive strength, reduce environmental footprint, and extend the lifespan of concrete structures. The composition includes inert steel slag aggregate or powder, a finely ground form of inert steel aggregate for construction, which exhibits interesting properties when included as concrete components. By incorporating inert steel slag aggregate or powder into concrete mixtures, the solution mitigates carbonation effects while taking advantage of waste materials as a resource, thereby improving the overall performance and longevity of concrete structures.

In an embodiment, the concrete mixture comprises:
18 to 20 % (w/w) of cementious material, where up to 8% (w/w) is cement and at least 9% (w/w) is fly ash (FA) or inert steel slag (ISAC) in its powdered form;
at least 70% (by weight of solid ingredients) or 65% or 66% (w/w) of ISAC;
up to 11% (w/w) of fine aggregates (0-2 mm);
up to 0.12 (w/w) of admixtures;
up to 6% (w/w) of water.

It also discloses the method for obtaining the concrete mixture and an infrastructure comprising the described concrete mixture.

In an embodiment, the resulting mixtures show better mechanical performance using inert steel slag aggregates or powder incorporation than conventional mixtures with natural aggregates.

The collective term "aggregates" refers to mineral materials such as sand, gravel, and crushed stone, which are used with a binding medium (e.g., cement) to form compound materials like concrete. Aggregates are essential components in concrete, providing bulk, strength, and durability to the mixture. Natural aggregates are typically extracted from large rock formations through open excavation and are mechanically crushed to achieve usable sizes. These materials play a critical role in determining the workability, mechanical properties, and long-term performance of concrete mixtures."

In an embodiment, the mechanical performance of the disclosed concrete mixtures was compared to that of identical conventional mixtures produced with natural aggregates (REF2). REF2 is a conventional concrete mixture designed for a strength class of C25/30, with a slump class of S4 (approximately 200 mm). It consists of natural aggregates, Portland cement (CEM II/A-L 42.5 R), fly ash (FA_2), and a water/cement ratio of 0.75. At 28 days, REF2 achieves a compressive strength of 27.37 MPa and an elasticity modulus of 27.01 GPa. The results showed that concrete mixtures of the present disclosure present competitive or superior mechanical properties, such as higher compressive strength and elasticity modulus, with improved carbonation resistance. The results are even more impressive considering that it was achieved with a significant reduction in the use of natural resources and cement content while maintaining or improving the structural performance compared to conventional mixtures.

Most works with ISAC incorporation in mixtures showed difficulties obtaining adequate values of air void content (Va), typically higher than expected. Due to the physical characteristics of ISAC, such as its porous and irregular nature, it is not easy to compact the mixtures with this type of material, maintaining Va values within the specified limits. This problem is solved by the concrete mixture of the present disclosure, which shows Va values according to the regulatory specifications, specifically, open porosity of 14.5% at atmospheric pressure and 21.8% under vacuum.

In an embodiment, the concrete mixture comprises portland cement (CEM II/A-L 42.5 R), fly ash (FA_2) or inert steel slag powder, sand (up to 2 mm), ISAC aggregates in two size fractions (up to 4 mm and up to 20 mm), superplasticizer (SP), plasticizer (PL), and water. The amount of each material is presented in **Table 1** in kg/m³. The size of aggregates was obtained by particle size distribution - the sieving method. In an embodiment, the values given in **Table 1** have a tolerance of 10% depending on specific designs to consider the variability of the waste materials.

**Table 1 - Mix design of the concrete mixtures developed in kg/m³ (sample EAFS8D1).**

| **Constituents** | **kg/m³** |
|---|---|
| Cement | 209.2 |
| FA | 244.0 |
| Natural Fine aggregate (0-2) | 279.5 |
| ISAC aggregates (0-4 and 0-20) | 1744.0 |
| Additive (Admixtures) | 3.26 |
| Water | 165.5 |

REF 2 is the reference mixture, and EAFS8D1 is the mixture developed in the present disclosure.

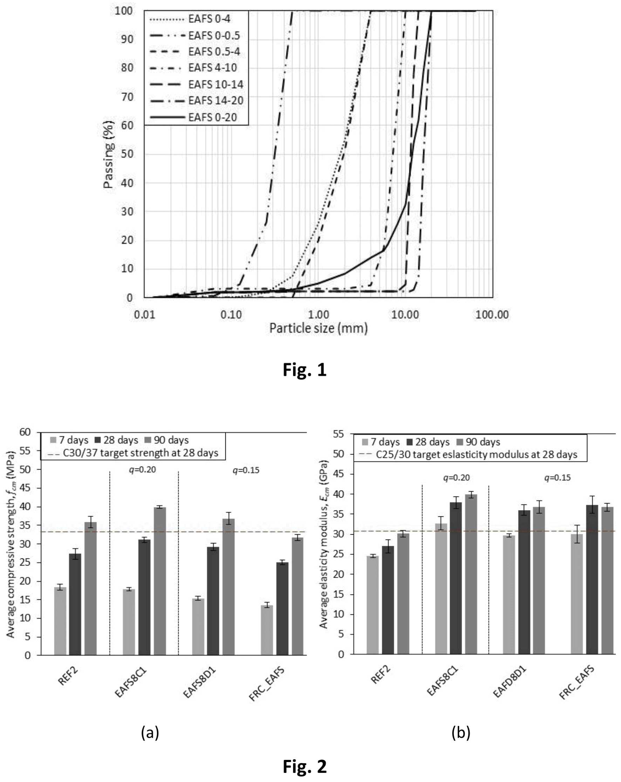

In an embodiment, **Figure 1** shows that ASIC (represented in the figure as EAFS) was divided into seven different grain sizes of 0-0.5 mm, 0.5-4 mm, 0-4 mm, 4-10 mm, 10-14 mm, 14-20 mm, and 0-20 mm. The EAFS 0-4 curve indicates that a significant portion of particles (around 90%) pass through the sieve at smaller particle sizes (around 1.00 mm). As the particle size increases, the passing percentage decreases sharply. The EAFS 0-0.5 curve indicates that approximately 50% of particles pass through the sieve at 1.00 mm, with the passing percentage decreasing gradually as particle size increases. In contrast, the EAFS 0.5-4 curve starts at a higher passing percentage of around 70% at 1.00 mm but exhibits a steeper decline as particle size increases, reflecting a different distribution of particle sizes within this range. EAFS 4-10, EAFS 10-14, EAFS 14-20 curves represent larger particle size ranges. They show that only a small percentage of particles (ranging from 10% to 40%) pass through the sieve at larger particle sizes (10.00 mm to 100.00 mm). EAFS 0-20 curve represents the overall particle size distribution, combining all the ranges. It shows a gradual decrease in passing percentage as the particle size increases, indicating a wide range of particle sizes in the sample.

In an embodiment, **Figure 2a** and **Figure 2b** show the compressive strength and elasticity modulus of EAFS8D1 (sample regarding Table 1) compared to REF2 (a conventional mixture with natural aggregates). These figures demonstrate that EAFS8D1 outperforms REF2 in terms of mechanical properties despite using a lower cement content and incorporating waste materials like ISAC and fly ash (FA).

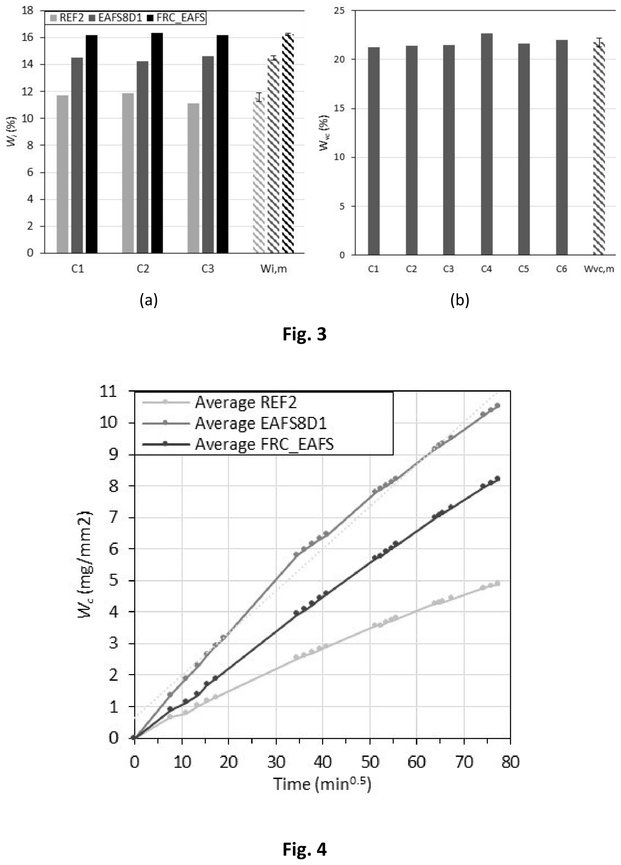

In an embodiment, **Figure 3** illustrates the water absorption properties of EAFS8D1, and REF2 mixtures. **Figure 3a** shows that EAFS8D1 has a slightly higher open porosity (14.5%) compared to REF2 (11.6%) when measured by immersion at atmospheric pressure, which is expected due to the porous nature of EAFS aggregates. Similarly, **Figure 4** demonstrates that EAFS8D1 has a higher capillarity coefficient (0.1704 mg/mm²·min^{0.5}) compared to REF2 (0.0747 mg/mm²·min^{0.5}), further confirming the increased water absorption tendency of ISAC aggregates. Despite these higher values, both the open porosity and capillarity coefficient of EAFS8D1 remain within acceptable limits for structural and medium-quality concrete, respectively.

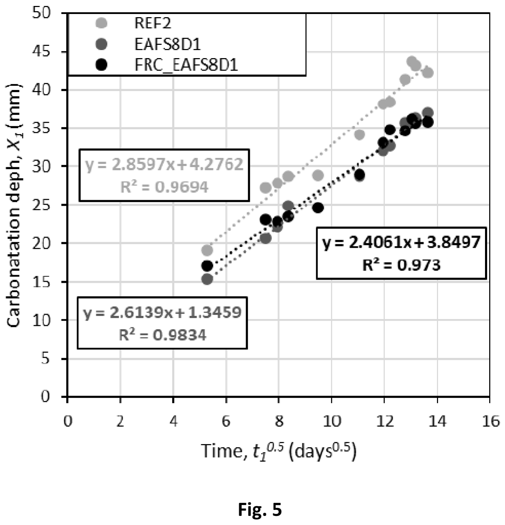

In an embodiment, **Figure 5** demonstrates that the EAFS8D1 concrete mixture exhibits superior carbonation resistance compared to the conventional mixture REF2.

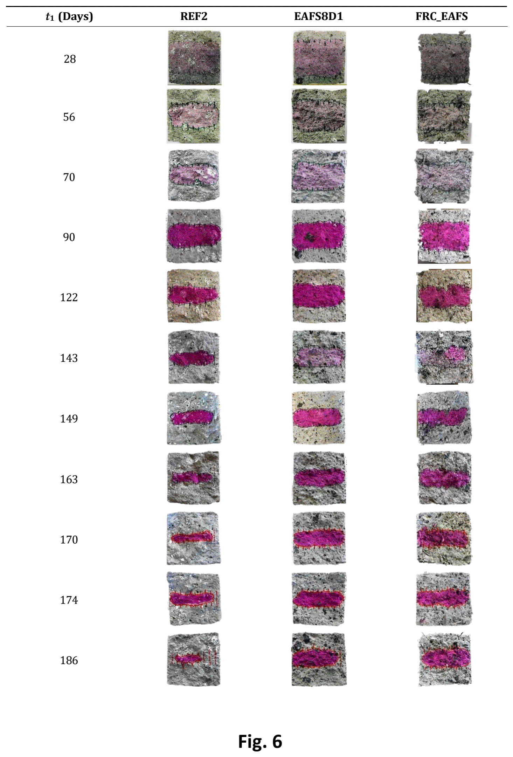

In an embodiment, **Figure 6** shows that at 28 days, the carbonation depth of EAFS8D1 is 15.41 mm, significantly lower than 19.12 mm for REF2, and this trend continues over time, with EAFS8D1 reaching 37.00 mm at 186 days compared to 42.29 mm for REF2. From figure 4, it can be concluded that the carbonation coefficient (Kc) of EAFS8D1 is 2.61 mm/day^{0.5}, lower than REF2's 2.86 mm/day^{0.5}, indicating slower carbonation progression. Additionally, EAFS8D1's carbonation resistance (Rc65) is 65.30 kg·year/m⁵, 25.1% higher than REF2's 48.92 kg·year/m⁵. These results highlight that EAFS8D1, incorporating waste materials like ISAC and FA, offers improved durability and carbonation resistance, making it a sustainable and durable alternative to conventional concrete.

Based on the abovementioned results, the disclosed concrete mixture, EAFS8D1, stands out from previous solutions by demonstrating superior mechanical, environmental, and durability performance, along with enhanced volumetric properties not achieved with natural, non-waste materials. It attains a compressive strength of 29.22 MPa and an elasticity modulus of 36.04 GPa at 28 days, surpassing the conventional REF2 mixture. Despite the inherent porosity of an inert steel slag aggregate for construction (ISAC), EAFS8D1 maintains *acceptable porosity* (14.5%) and *sorptivity* (0.1704 mg/mm²·min^{0.5}), meeting structural concrete standards. In terms of durability, it exhibits greater carbonation resistance, with a shallower carbonation depth (15.41 mm at 28 days) and a lower carbonation coefficient (2.61 mm/day^{0.5}) compared to REF2. Incorporating up to 70% ISAC and 10% FA, EAFS8D1 reduces dependence on natural aggregates and cement, offering a more sustainable alternative to conventional concrete.

In an embodiment, the sustainable and high (environmental)-performance concrete mixture (EAFS8D1), comprising 7.9-9.2% (w/w) cementitious material, at least 70% (by weight of solid ingredients) or 66% (w/w) of ASIC, and at least 9% (w/w) of FA or ISAC powder as a supplementary cementitious material. This mixture demonstrates good mechanical performance, achieving a compressive strength of at least 29.22 MPa and an elasticity modulus of 36.04 GPa at 28 days, outperforming conventional mixtures. Notably, EAFS8D1 exhibits exceptional carbonation resistance, with a carbonation depth of 15.41 mm at 28 days and a carbonation coefficient of 2.61 mm/day^{0.5}, significantly lower than conventional mixtures like REF2 (19.12 mm and 2.86 mm/day^{0.5}, respectively). The use of waste materials, such as ISACs and FA, not only enhances durability but also reduces reliance on natural aggregates and cement, making EAFS8D1 a sustainable and eco-friendly solution for structural applications.

The present disclosure provides a cost-effective and environmentally responsible alternative to traditional concrete, combining enhanced mechanical properties, improved durability, and reduced environmental impact.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The term "comprising", whenever used in this document is intended to indicate the presence of stated features, integers, steps, or components, but not to preclude the presence or addition of one or more other features, integers, steps, components or groups thereof.

The disclosure should not be seen in any way restricted to the embodiments described, and a person with ordinary skill in the art will foresee many possibilities to modifications thereof. The above-described embodiments are combinable.

The following claims further set out particular embodiments of the disclosure.

## Claims

1. A concrete mixture comprising:
at least 7.5% (w/w) of cementious material;
at least 60% (w/w) of steel slag aggregates;
at least 9% (w/w) of a filler;
0.01% to 0.2% (w/w) of additives;
2% to 10% (w/w) of water,
wherein the steel slag aggregates are inert steel slag aggregate, having a particle size up to 20 mm;
wherein the filler is selected from fly ashes or inert steel slag aggregate in powder form.

2. Concrete mixture according to the previous claim comprising:
8% (w/w) of cementitious material;
75% (w/w) of inert steel slag aggregates;
9% (w/w) of filler;
up to 0.12 (w/w) of additives;
up to 6% (w/w) of water.

3. Concrete mixture according to any of the previous claims further comprising up to 11% (w/w) of fine aggregates, preferably natural fine aggregates.

4. Concrete mixture according to any of the previous claims wherein the filler has a particle size below 150 µm.

5. Concrete mixture according to any of the previous claims wherein the inert steel slag aggregate has a particle of 1 to 15 mm; more preferably 4 to 10 mm, measured by sieving according to NP EN 933-1:2014.

6. Concrete mixture according to any of the previous claims wherein the inert steel slag has a porosity from 0.20 to 0.80, preferably 0.40 to 0.65, as determined by water absorption tests.

7. Concrete mixture according to any of the previous claims wherein the inert steel slag has a pore size inferior to 100 µm; preferably, 50% of the pore sizes range from 10-50 µm.

8. Concrete mixture according to any of the previous claims wherein at least 37.0% (w/w) of the inert steel slag has an aggregate size up to 4 mm, wherein each aggregate is measured by sieving according to NP EN 933-1:2014; preferably the particles are categorized into 0.01-4 mm fractions.

9. Concrete mixture according to any of the previous claims wherein at least 29.0% (w/w) of the inert steel aggregate slag has an aggregate size ranging up to 20 mm measured by sieving according to EN 933-1:2014; particularly the particles are categorized into 0-20 mm fractions.

10. Concrete mixture according to the previous claim wherein the filler is selected from fly ash or other fine mineral powders, particularly inert steel slag aggregate in powder form.

11. Concrete mixture according to any of the previous claims wherein the additive is selected from the group consisting of superplasticizers (SP) based on poly aryl ether (PAE) polymers and plasticizers (PL) based on modified lignosulphonates, or mixtures thereof.

12. Concrete mixture according to the previous claim wherein the amount of superplasticizer is from 0.01% to 0.1% (w/w), and the amount of plasticizer is 0.01% to 0.1% (w/w).

13. Concrete mixture according to any of the previous claims comprising up to 20% (w/w) of a binder; preferably 18 to 20% (w/w).

14. Concrete mixture according to the previous claim wherein the binder is selected from Portland cement, fly ash, inert steel slag aggregates powder, or other supplementary cementitious materials.

15. Method of obtaining the concrete mixture according to any of the previous claims comprising the following steps:
obtaining inert steel slag aggregate for constructionfrom a steel production process;
grinding and refining the inert steel slag aggregate to obtain two groups of grain size fractions: 0-4 mm and 0-20 mm, with particle sizes ranging from 0.01 to 20 mm; preferably 4 to 15 mm;
mixing the inert steel slag aggregate for construction with cementitious material, fillers, and additives, to form a concrete mixture;
curing the concrete mixture.
